# DEMANDE DE BREVET EUROPEEN

(11) **EP 0 933 895 A1**
(43) Date de publication de la demande: **04.08.1999**
(21) Numéro de dépôt: 99400215.2
(22) Date de dépôt: 01.02.1999
(51) Int. Cl.: H04J 14/08, H04B 10/213

(54) **Procédé de détection d'un ou plusieurs canaux libres dans un multiplex temporel optique, un dispositif de mise en oeuvre et une application du dispositif**

(30) Priorité: 02.02.1998 FR 9801138
(71) Demandeur: ALCATEL, 75008 Paris (FR)
(72) Inventeur: Desurvire, Emannuel, 91680 Bruyeres le Chatel (FR)
(74) Mandataire: Fournier, Michel Robert Marie

(57) **Abrégé**

L'invention concerne un procédé de détection d'un ou plusieurs canaux temporels libres dans un signal optique à multiplexage temporel (E) caractérisé en ce qu'il comporte les étapes suivantes :
- échantillonner (105, 110) les impulsions optiques successives d'au moins un desdits canaux (1-N),
- mesurer (119-122) la puissance optique moyenne des impulsions échantillonnées pendant une durée prédéterminée,
- générer (150) un signal de détection lorsque ladite puissance optique moyenne est inférieure ou égale à une valeur de seuil prédéterminé.
Elle s'applique à l'insertion de signaux dans les noeuds de commutation des réseaux de communications optiques.

## Description

L'invention se rapporte à un procédé de détection d'un ou plusieurs canaux libres (ou inoccupés) dans un multiplex temporel optique, à un dispositif de mise en oeuvre du procédé et à une application dudit dispositif.

L'invention s'applique aux réseaux de communication à multiplexage temporel de trains d'impulsions optiques codées dénommés Optical Time Division Multiplex (OTDM) en terminologie anglo-saxonne et que l'on qualifiera indifféremment dans la suite de multiplex temporel optique ou signal optique à multiplexage temporel.

Il est rappelé tout d'abord que les noeuds de commutation des réseaux de communication sont le siège d'opérations d'extraction et d'insertion d'informations sur les multiplex entrants, effectuées en fonction de l'acheminement prévu pour ces informations transportées par les multiplex.

Dans le cas des réseaux de communication à multiplexage temporel, définis notamment par la norme SDH (Synchronous Digital Hierarchy) les informations se trouvent sous forme de trames d'impulsions courtes ayant un débit B (par exemple 10 Gbit/s) interdigitées bit par bit N fois de manière à obtenir un signal résultant ayant un débit N.B (40 Gbit/s à 100 Gbit/s).

Lors de l'arrivée de ce signal résultant dans un noeud de commutation, une ou plusieurs trames de ce signal peuvent être physiquement extraites du multiplex par une opération d'extraction (DROP function en terminologie anglo-saxonne), laissant ainsi libres des intervalles de temps ou canaux temporels dans le signal à multiplexage temporel résultant.

Ces mêmes noeuds de commutation peuvent aussi être le siège d'opérations d'insertion d'informations (ADD function en terminologie anglo-saxonne) effectuées dans les canaux temporels inoccupés ou libérés du multiplex optique entrant.

Jusqu'à présent les fonctions d'insertion (ADD) ont été réalisées de façon électronique. A cette fin tous les signaux multiplexés sont détectés puis stockés dans des mémoires tampons de manière à pouvoir en fin de traitement reconstituer les trames formant ces signaux.

La réaffectation de trames à l'issue d'opérations d'extraction ou d'insertion est réalisée par des circuits logiques de supervision.

Dans le cas de multiplex temporels optiques (OTDM) il n'y a pas d'état de la technique assurant ces fonctions directement dans le domaine optique.

Selon un compromis, il est prévu de démultiplexer tous les signaux optiques contribuant à former le multiplex en N canaux temporels, à traiter électroniquement ces canaux à la fréquence de transmission ou de bande de base, puis à reformer un signal à multiplexage temporel optique en régénérant chacun des signaux optiques de base et en les interdigitant dans le temps.

Cette solution n'est pas satisfaisante car elle oblige à passer du domaine optique au domaine électronique ce qui conduit, lorsque l'on traite des débits supérieurs à 10 Gbit/s à la réalisation des fonctions électroniques insertion et extraction complexes et chères. En outre pour des débits de 40 Gbit/s les circuits électroniques de stockage des données et de commutation sont utilisés pour fonctionner directement à ces débits.

Or, dans le cas de multiplex temporel optique ce débit est atteint avec 4 signaux de base à 10 Gbit/s interdigités pour former le multiplex à 40 Gbit/s et les données pourraient être traitées électroniquement par des circuits à 10 Gbit/s. Mais cela suppose que le signal OTDM soit démultiplexé, chaque signal du multiplex étant traité électroniquement indépendamment pour être seulement après, reconstitué.

La présente invention permet de résoudre ce problème en apportant une solution permettant de garder le signal dans le domaine optique pendant les traitements dans le noeud de commutation.

Pour cela, l'invention propose de détecter le ou les canaux libres (ou inoccupés) du multiplex. Elle propose également d'identifier l'ordre du ou des canaux libre(s) détecté(s). Elle permet en outre d'insérer les impulsions codées d'un nouveau signal dans le premier canal libre détecté et identifié.

Plus particulièrement l'invention propose un procédé de détection d'un ou plusieurs canaux temporels libres dans un signal optique à multiplexage temporel principalement caractérisé en ce qu'il comporte les étapes suivantes :
- échantillonner les impulsions optiques successives d'au moins un desdits canaux,
- mesurer la puissance optique moyenne des impulsions échantillonnées pendant une durée prédéterminée,
- générer un signal de détection lorsque ladite puissance optique moyenne est inférieure ou égale à une valeur de seuil prédéterminé.

Selon une autre caractéristique le procédé comporte une étape d'identification de l'ordre des canaux temporels du multiplex.

L'étape d'identification comporte les étapes suivantes:
- diviser l'énergie du signal optique multiplexé pour former autant de signaux optiques issus de ce signal que de canaux temporels formant le multiplex,
- opérer les étapes d'échantillonnage, de mesure de la puissance moyenne et de génération d'un signal de détection sur chacun desdits signaux .

Avantageusement, l'étape d'échantillonnage des signaux divisés est réalisée avec des signaux d'horloge correspondant à la fréquence en bande de base des signaux optiques multiplexés, décalés l'un de l'autre d'une durée correspondant à la largeur d'un canal temporel.

Les signaux d'horloge sont obtenus par récupération de la fréquence en bande de base B des signaux optiques formant le multiplex.

Selon une autre caractéristique de l'invention, le procédé comporte en outre une étape d'insertion d'impulsions optiques d'un nouveau signal dans le canal libre détecté.

L'étape d'insertion consiste à injecter les impulsions optiques successives du nouveau signal dans le premier canal temporel libre détecté et identifié du multiplex.

Dans le cas où d'autres canaux temporels disponibles du multiplex ont été détectés l'étape d'insertion consiste, à réitérer toutes les étapes du procédé autant de fois qu'il y a de canaux libres pour ce multiplex.

L'invention concerne en outre un dispositif de détection et d'identification d'un ou plusieurs canaux temporels libres dans un signal optique à multiplexage temporel, principalement caractérisé en ce qu'il comporte :
- un coupleur à une entrée, N sorties pour diviser le signal du multiplex optique en autant de signaux que de canaux temporels formant le multiplex,
- un circuit d'échantillonnage de chaque signal de sortie du coupleur, piloté respectivement par un signal d'horloge , correspondant à la fréquence en bande de base des signaux optiques multiplexés, et décalés l'un de l'autre d'une durée correspondant à la largeur d'un canal temporel,
- un circuit de détection basse fréquence apte à mesurer la puissance moyenne des impulsions optiques pendant une période déterminée de chaque canal temporel identifié par le circuit d'échantillonnage,
- un circuit de génération d'un signal de détection d'un canal libre lorsque la puissance moyenne des impulsions optiques est inférieure ou égale à un seuil prédéterminé.

A cette fin, le circuit d'échantillonnage comporte une porte optique placée sur le chemin de chaque signal de sortie du coupleur et le circuit de détection, et une ligne à retard associée à chaque porte optique pour obtenir un retard entre chaque signal d'horloge d'une durée correspondant à la largeur d'un canal temporel.

Les circuits de détection basse fréquence et de génération de signaux sont constitués par un réseau de photodiodes chacune étant suivie d'un répéteur.

En outre, le dispositif comporte un récupérateur d'horloge à la fréquence en bande de base B des signaux optiques multiplexés.

L'invention concerne également une application du dispositif de détection. Cette application est constituée par un système d'insertion d'impulsions optiques codées dans un signal optique à multiplexage temporel. Le système comporte au moins un module d'insertion muni dudit dispositif de détection.

Dans le cas où le système comporte plusieurs modules d'insertion, ces modules sont couplés sur la ligne en cascade et le circuit de récupération d'horloge est le même pour tous les modules.

Avantageusement, le système comporte une seule source de génération d'impulsions optiques pour tous les modules d'insertion.

Un module d'insertion comporte en outre une unité logique à N entrées et N sorties, chaque entrée étant reliée à une sortie du circuit de génération de signaux de détection, et chaque sortie étant reliée à une porte optique, dont l'ouverture est commandée par ledit signal de sortie, ces portes étant reliées à un coupleur optique à travers une ligne optique à retard distincte imposant un retard en sortie l'une par rapport à l'autre d'une durée égale à la largeur d'un canal temporel, lesdites portes optiques recevant sur une autre entrée les impulsions optiques codées à insérer dans le premier canal libre détecté.

L'unité logique comporte des portes de type ET et non ET ou équivalent, agencées de manière à délivrer un signal de commande d'ouverture de portes optiques pour la sortie correspondant au premier canal temporel libre détecté.

Les portes optiques sont constituées par des amplificateurs optiques à semi-conducteur (SOA) ou à fibres dopée (EDFA).

L'invention sera mieux comprise à la lecture de la description qui est faite et qui est donnée à titre illustratif et non limitatif en regard des dessins annexés sur lesquels :
- la figure 1 représente un module d'insertion comportant un dispositif de détection mettant en oeuvre le procédé selon l'invention,

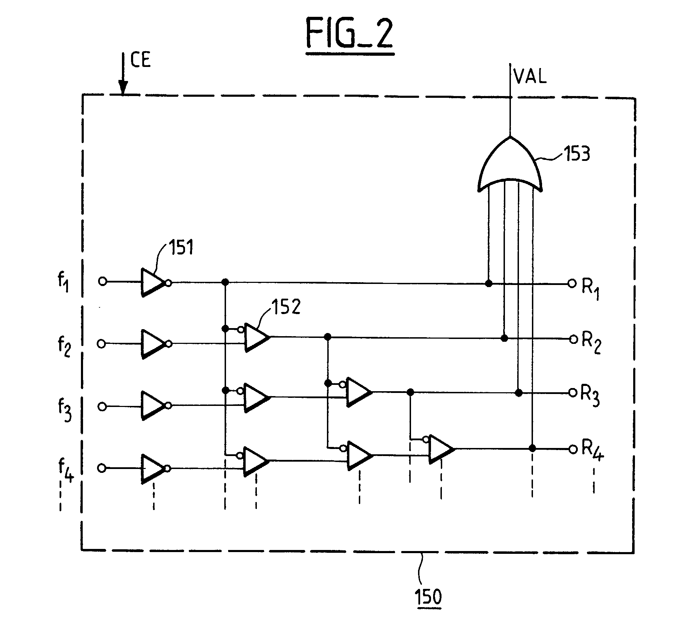

- la figure 2 illustre une réalisation particulière pour le circuit logique 150 de la figure 1,
- la figure 3 illustre un système d'insertion applicatif.

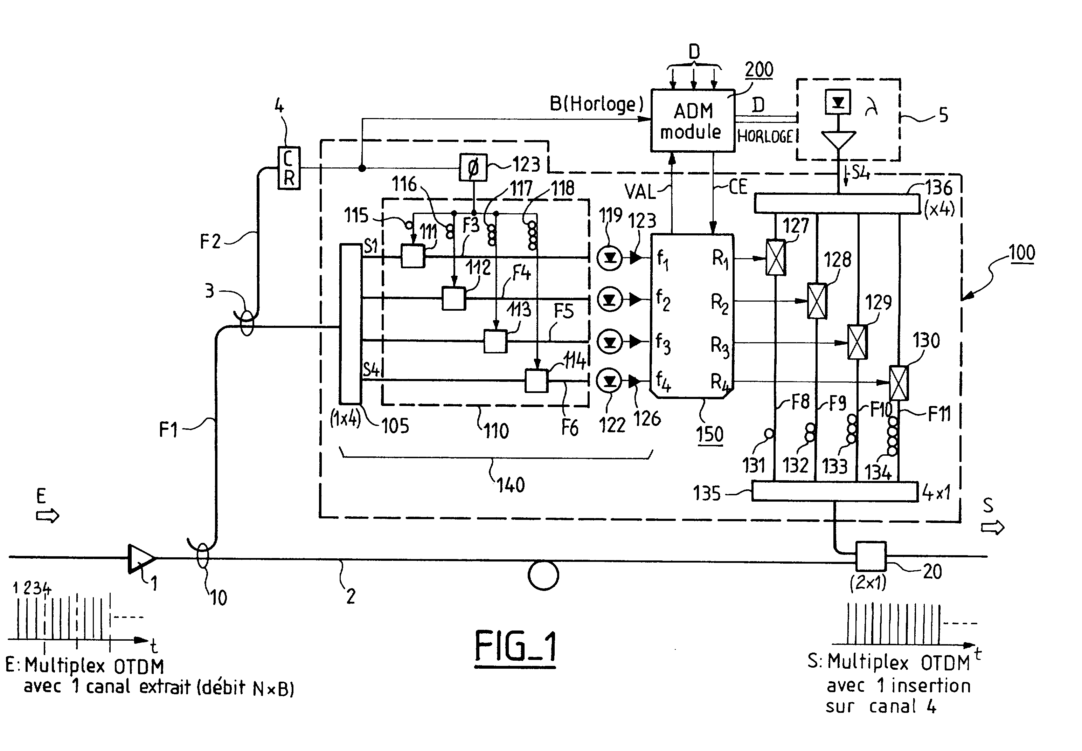

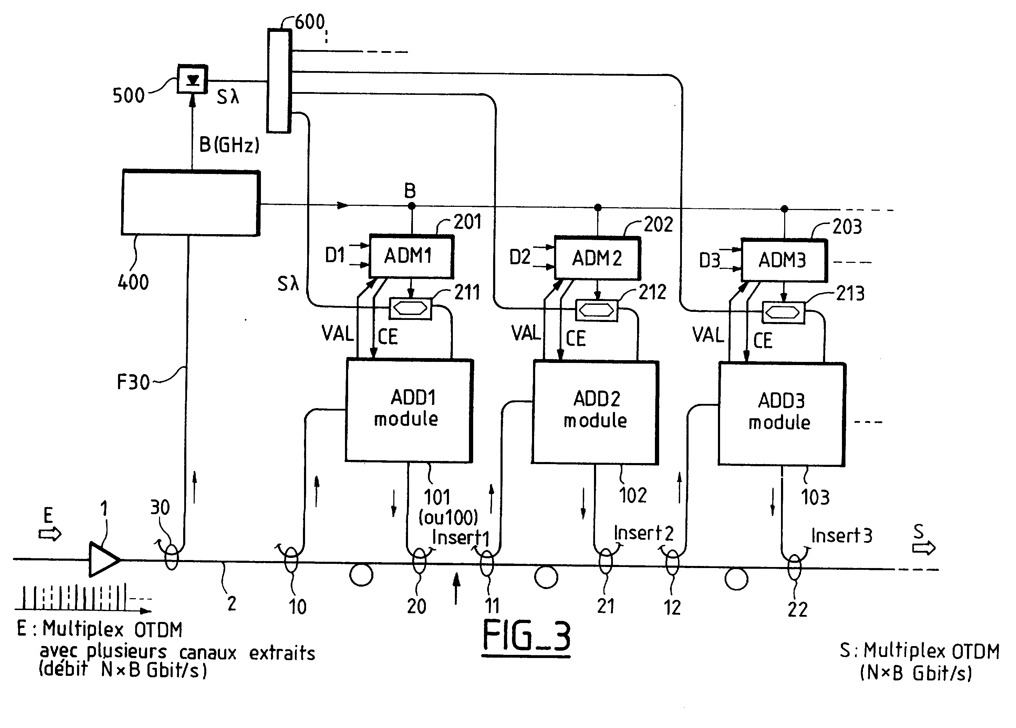

Le module d'insertion représenté sur la figure 1 porte la référence 100, des modules identiques ont été représentés sur la figure 3 avec des références 101, 102, 103... 10P.

Pour simplifier l'exposé et la représentation on a choisi un nombre de canaux temporels N=4.

Ainsi le multiplex temporel optique entrant E illustré sur cette figure comporte N=4 canaux temporels. Ce multiplex est transmis par la ligne de transmission optique 2 et amplifié avant d'entrer dans le module par un amplificateur optique 1.

Une partie de ce signal E, environ 5% de l'énergie, est prélevée au moyen d'un coupleur optique 10 pour être injectée à partir d'un tronçon de fibre F1 à l'entrée de ce module d'insertion 100.

Le module d'insertion comporte un dispositif 140 (circuits 105, 110, 119-122, 123-126) de détection d'un ou plusieurs canaux libres du multiplex E apte à :
- échantillonner les impulsions optiques successives d'au moins un des canaux (1-4) du multiplex,
- mesurer la puissance optique moyenne des impulsions échantillonnées pendant une durée prédéterminée,
- générer un signal de détection lorsque ladite puissance optique moyenne est inférieure ou égale à une valeur de seuil prédéterminé.

En outre, une faible quantité d'énergie du multiplex temporel optique entrant E est également prélevée soit directement sur la fibre 2, soit sur la fibre F1 pour récupérer le signal d'horloge à la fréquence bande de base canal B. Le circuit 4 (classique) permet de réaliser cette récupération d'horloge.

Le module d'insertion 100 dans sa partie détection comporte donc un diviseur 105 apte à recevoir le signal transmis par la fibre F1 et à le répartir en sortie sur quatre fibres optiques F3 - F6 reliées à des photodiodes de détection basse fréquence 119 - 122.

Sur chacune des fibres F3 - F6, c'est-à-dire entre chaque sortie du diviseur 105 et la photodiode associée 119 - 122 est disposée une porte optique telle qu'un modulateur électroabsorption 111 - 114.

Chaque porte est pilotée par le signal d'horloge B après passage dans des lignes à retard 115-118 distinctes imposant un retard d'une porte à l'autre de la largeur d'un canal temporel. En pratique, le signal d'horloge est déphasé d'une valeur prédéterminée par le déphaseur 123 pour l'usage par le circuit 110.

Le réseau à basse fréquence (ou à fréquence en bande de base) des photodiodes 119-122 est apte à mesurer le niveau de puissance moyenne du signal sur chaque canal temporel.

Le signal résultant obtenu en sortie de la détection pour chaque canal est appliqué aux entrées d'un répéteur logique 123-126 apte à fournir une information numérique sur l'état "libre" ou "occupé" de chaque canal.

La logique définie est telle qu'un répéteur "i" aura une sortie fi=0 lorsque le canal "i" est libre et fi=1 lorsque le canal est occupé. L'information de sortie de ces répéteurs f1, f2 - fN, (c'est à dire f1 -f4) est appliquée aux entrées d'une unité logique 150 apte à générer une table de décision R1-RN (c'est-à-dire R1-R4) permettant de valider le premier intervalle de temps libre identifié.

Lorsque l'une de ces sorties R1-R4 est à 1, cela signifie que l'intervalle de temps correspondant est disponible.

On peut se reporter à la table de décision T donnée en annexe pour mieux comprendre.

Afin de simplifier cette table on a pris l'exemple de 3 canaux temporels issus d'un multiplex temporel optique.

En fonction des différents états logiques des entrées f1 - f3, l'unité logique 150 fournit les états logiques illustrés sur cette table pour les sorties R1-R3.

La logique de décision 150 est conçue de manière à valider le premier canal qui est identifié en tant que canal disponible dans la séquence multiplex temporel optique.

Elle est composée de portes logiques non ET 151, ET 152 et d'une porte OU 153 fournissant le signal VAL de validation d'un canal disponible. Bien entendu, tout autre assemblage ou type de porte produisant la fonction logique désirée pourrait être utilisé.

Un signal CE fin de cycle est reçu pour une réinitialisation des entrées fi à "1".

Les signaux de sortie R1-R4 de l'unité logique 150 sont appliqués à un réseau de portes à amplificateurs optiques semi-conducteurs (semi-conductor optical amplifier SOA) 127-130 suivies de lignes à retard distinctes 131-134.

Les portes optiques 127-130 pourraient également être réalisées par des fibres dopées (EDFA).

Ces portes optiques reçoivent en outre sur une autre entrée les impulsions codées d'un signal optique S4 (dans cet exemple) à insérer dans le premier canal temporel qui aura été détecté disponible. Ce signal S4 arrive sur toutes les portes optiques au moyen d'un coupleur optique 136 possédant une entrée et quatre sorties.

Le signal optique d'impulsions codées est fourni par une source laser 5 de longueur d'onde λ. Le signal de la source 5 est modulé par des données D reçu d'un module électronique de gestion de l'insertion 200 de conception classique en soi. Ce module 200 sert à piloter l'insertion d'un signal optique dans un canal disponible du multiplex.

Le module 200 reçoit pour cela le signal horloge B récupéré et le signal VAL du circuit logique 150 qui est généré lorsqu'un canal libre a été détecté. C'est ce module qui génère le signal CE fin de cycle pour le circuit logique 150 et qui va servir à effectuer un "reset" sur les entrées f1-f4, les positionnant toutes à "1".

Ces lignes à retard 131-134 peuvent être réalisées par des fibres optiques de longueur prédéterminée pour chaque retard à imposer.

Le retard imposé pour chaque ligne optique F8 à F11 correspond à la position temporelle du canal disponible détecté. Pour le 4ème canal, le retard est égal à 3 intervalles de temps par rapport au 1er canal. Ainsi le retard imposé d'une fibre par rapport à la suivante est égal à la durée d'un canal temporel.

Les impulsions codées du signal à insérer arrivent par conséquent dans le canal temporel libre du multiplex E à travers le coupleur (4x1) 135 et le coupleur (2x1) 20 placé sur la ligne 2.

La figure 3 illustre un système d'insertion dans un noeud de commutation comportant une cascade de modules d'insertion 101-10P (p=3 illustré) muni d'un dispositif de détection 140 objet de l'invention.

Chaque module 101-103 est couplé à la ligne 2 en entrée par un coupleur optique 10-12, et en sortie par un coupleur optique 20-22.

Le premier module 101 permet d'insérer les impulsions optiques d'un nouveau signal dans le premier canal temporel disponible détecté par le dispositif de détection 140 présent dans ce module.

Le deuxième module 102 permet d'insérer des impulsions optiques d'un autre signal dans le deuxième canal temporel disponible détecté et ainsi de suite pour autant de canaux temporels libres détectés sur le multiplex E.

Afin de simplifier la réalisation et de réduire les coûts on utilise le même signal d'horloge B pour tous les modules de gestion d'insertion 201-203 ... du système. Ce signal d'horloge B est obtenu par un circuit 400 de récupération d'horloge du signal en bande de base des signaux optiques multiplexés à partir d'une fibre optique F30 couplée par un coupleur 30 à la ligne 2.

Cette horloge B pilote une source laser 500 qui fournit un signal Sλ utilisé pour générer les impulsions optiques de chaque signaux à insérer dans les canaux disponibles.

Pour les mêmes raisons que précédemment on va là encore préférentiellement utiliser une source laser unique pour tout le système.

Les modules électroniques de gestion 201-203 reçoivent le signal d'horloge B et les données D respectives à chaque nouveau signal. Sur réception du signal VAL, un module 201 communique des données D1, D2, D3 respectivement à un modulateur 211, 212, 213 qui vont servir à moduler le signal optique Sλ qu'il reçoit de la source 500 à travers un coupleur 600 (1xN) .

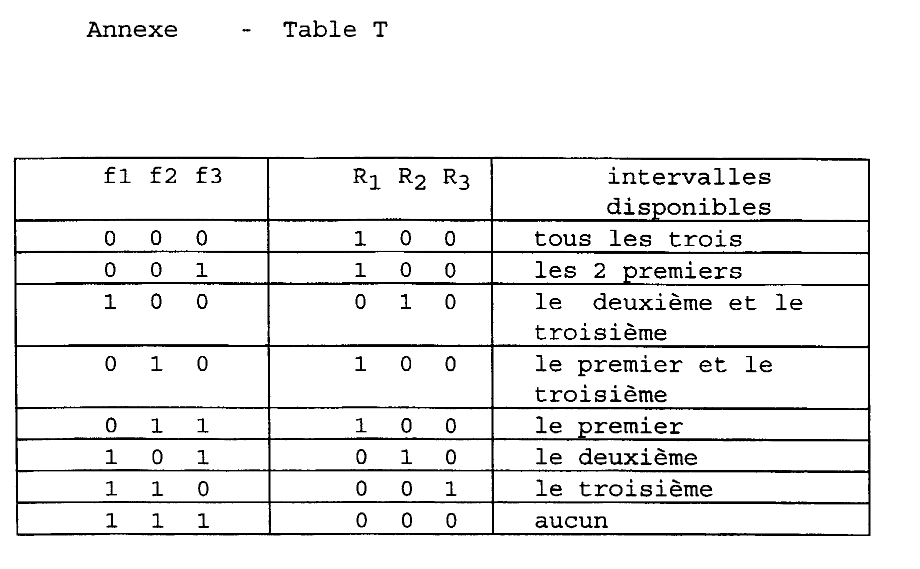

## Revendications

1. Procédé de détection d'un ou plusieurs canaux temporels libres dans un signal optique à multiplexage temporel (E) caractérisé en ce qu'il comporte les étapes suivantes :
- échantillonner les impulsions optiques successives d'au moins un desdits canaux (1-N),
- mesurer la puissance optique moyenne des impulsions échantillonnées pendant une durée prédéterminée,
- générer un signal de détection lorsque ladite puissance optique moyenne est inférieure ou égale à une valeur de seuil prédéterminé.

2. Procédé de détection selon la revendication 1, caractérisé en ce qu'il comporte une étape d'identification de l'ordre des canaux temporels du multiplex.

3. Procédé de détection selon la revendication 2, caractérisé en ce que l'étape d'identification comporte les étapes suivantes :
- diviser l'énergie du signal optique multiplexé pour former autant de signaux optiques issus de ce signal que de canaux temporels formant le multiplex,
- opérer les étapes d'échantillonnage, de mesure de la puissance moyenne et de génération d'un signal de détection sur chacun desdits signaux (S1-SN).

4. Procédé de détection selon la revendication 3, caractérisé en ce que l'étape d'échantillonnage des signaux divisés (S1-SN) est réalisée avec des signaux d'horloge (H1-HN) correspondant à la fréquence en bande de base des signaux optiques multiplexés, décalés l'un de l'autre d'une durée correspondant à la largeur d'un canal temporel.

5. Procédé de détection selon la revendication 4, caractérisé en ce que les signaux d'horloge sont obtenus par récupération de la fréquence en bande de base B des signaux optiques formant le multiplex.

6. Procédé de détection selon l'une quelconque des revendications précédentes, caractérisé en ce qu'il comporte en outre une étape d'insertion d'impulsions optiques d'un nouveau signal dans le canal libre détecté.

7. Procédé de détection selon la revendication 6, caractérisé en ce que l'étape d'insertion consiste à injecter les impulsions optiques successives du nouveau signal dans le premier canal temporel libre détecté et identifié du multiplex (E).

8. Procédé de détection selon la revendication 6, caractérisé en ce que l'étape d'insertion consiste dans le cas où d'autres canaux temporels disponibles du multiplex ont été détectés, à réitérer toutes les étapes du procédé autant de fois qu'il y a de canaux libres pour ce multiplex (E).

9. Dispositif de détection et d'identification d'un ou plusieurs canaux temporels libres dans un signal optique à multiplexage temporel caractérisé en ce qu'il comporte :
- un coupleur(105) à une entrée, N sorties pour diviser le signal du multiplex optique (E) en autant de signaux que de canaux temporels formant le multiplex,
- un circuit d'échantillonnage (110) de chaque signal de sortie du coupleur (S1 - SN), piloté respectivement par un signal d'horloge (H1 - HN), correspondant à la fréquence en bande de base des signaux optiques multiplexés, et décalés l'un de l'autre d'une durée correspondant à la largeur d'un canal temporel,
- un circuit de détection basse fréquence (119-122) apte à mesurer la puissance moyenne des impulsions optiques pendant une période déterminée de chaque canal temporel identifié par le circuit d'échantillonnage,
- un circuit de génération d'un signal de détection (123-126) d'un canal libre lorsque la puissance moyenne des impulsions optiques est inférieure ou égale à un seuil prédéterminé.

10. Dispositif de détection et d'identification selon la revendication 9, caractérisé en ce que le circuit d'échantillonnage (110) comporte une porte optique (111-114) placée sur le chemin de chaque signal de sortie du coupleur (105) et le circuit de détection, et une ligne à retard (115-118) associé à chaque porte optique pour obtenir un retard entre chaque signaux d'horloge d'une durée correspondant à la largeur d'un canal temporel.

11. Dispositif de détection selon la revendication 9 ou 10, caractérisé en ce que les circuits de détection basse fréquence (119-122) et de génération de signaux (123-126) sont constitués par un réseau de photodiodes chacune étant suivie d'un répéteur.

12. Dispositif de détection selon l'une quelconque des revendications 9 à 11, caractérisé en ce qu'il comporte un récupérateur d'horloge (4, 400) à la fréquence en bande de base B des signaux optiques multiplexés.

13. Système d'insertion d'impulsions optiques codées dans un signal optique à multiplexage temporel, caractérisé en ce qu'il comporte au moins un module d'insertion (100 ou 101) comportant un dispositif de détection selon l'une quelconque des revendications 9 à 12.

14. Système d'insertion selon la revendication 13, caractérisé en ce que dans le cas où il comporte plusieurs modules d'insertion (101-10P), ces modules sont couplés sur la ligne en cascade et le circuit de récupération d'horloge est le même pour tous les modules.

15. Système d'insertion selon les revendications 12 à 14, caractérisé en ce qu'il comporte une seule source (500) de génération d'impulsions optiques pour tous les modules d'insertion.

16. Système d'insertion selon les revendications 12 à 15, caractérisé en ce que le module d'insertion (100 ou 101) comporte en outre une unité logique (150) à N entrées et N sorties, chaque entrée (f1-fN) étant reliée à une sortie du circuit de génération de signaux de détection (123-126), et chaque sortie (R1-RN) étant reliée à un porte optique (127-130), dont l'ouverture est commandée par ledit signal de sortie (R1-RN), ces portes étant reliées à un coupleur optique (135) à travers une ligne optique à retard distincte (131-134) imposant un retard en sortie l'une par rapport à l'autre d'une durée égale à la largeur d'un canal temporel, lesdites portes optiques (127-130) recevant sur une autre entrée les impulsions optiques codées à insérer dans le premier canal libre détecté.

17. Système d'insertion selon la revendication 16, caractérisé en ce que l'unité logique (150) comporte des portes de type ET et non ET ou équivalent agencées de manière à délivrer un signal de commande d'ouverture de portes optiques (127-130) pour la sortie (R1-RN) correspondant au premier canal temporel libre détecté.

18. Système d'insertion selon la revendication 17, caractérisé en ce que les portes optiques (127-130) sont constituées par des amplificateurs optiques à semi-conducteur (SOA),ou à fibres dopée (EDFA).
